# EUROPEAN PATENT APPLICATION

(11) **EP 3 447 619 A1**
(43) Date of publication of application: **27.02.2019**
(21) Application number: 18179708.5
(22) Date of filing: 26.06.2018
(51) Int. Cl.: G06F 3/044, G06F 3/047

(54) **TOUCH PANEL AND DISPLAY DEVICE**

(30) Priority: 26.06.2017 JP 2017124498
(71) Applicant: VTS-Touchsensor Co., Ltd., Higashiomi-shi Shiga 527-0046 (JP)
(72) Inventor: Bani, Kanae, Taito-ku, Tokyo 110-0016 (JP); Harada, Takahiro, Taito-ku, Tokyo 110-0016 (JP)
(74) Representative: Rau, Schneck & Hübner Patentanwälte Rechtsanwälte PartGmbB

(57) **Abstract**

The problem addressed by the present invention lies in providing a touch panel with which it is possible to suppress a deterioration in visibility, and a display device on which the touch panel is laminated.

In order to solve this problem, a touch panel 1 is provided in which a plurality of parallelogram patterns RP comprising four wires 4a-4d surrounding one opening (2) are formed by a plurality of conductor wires, said touch panel 1 comprising: a first conduction layer including a plurality of conductor wires arranged without intersections, and a second conduction layer laminated on the first conduction layer and including a plurality of conductor wires arranged without intersections, wherein, when seen in a plan view in a state in which the first conduction layer is laminated on the second conduction layer, first conductor wires (14) constituting the conductor wires in the first conduction layer and second conductor wires (24) constituting the conductor wires in the second conduction layer are arranged intersecting in such a way that the plurality of parallelogram patterns RP are formed.

## Description

### Technical Field

The present invention relates to a touch panel laminated on a display device, such as a touch panel provided on a mobile communication terminal, and to a display device on which a touch panel is laminated.

### Background Art

JP 2014-63468 A (Patent document 1), for example, describes technology in which a pattern is formed by fine metallic wires (fine metal wires) on a touch panel provided on a display device.

JP 2014-63468 A describes technology in which a mesh pattern is formed by combining unit patterns in which the width of fine metal wires (also referred to below as the "wire width") in intersection regions where two fine metal wires intersect is smaller than the width of fine metal wires outside the intersection regions.

### Summary of the Invention

### Problem to be Solved by the Invention

In the technology described in JP 2014-63468 A, the mesh pattern is formed on one surface of a transparent substrate, in other words two fine metal wires included in the same layer intersect. The width of the fine metal wires therefore increases due to etching residue etc. from wet etching in the portions where the fine metal wires included in the same layer intersect, compared with other portions (the portions where the fine metal wires are spaced apart, etc.), and there is a problem in that there is a deterioration in visibility of the touch panel.

The present invention focuses on the abovementioned problem, and the aim thereof lies in providing a touch panel with which it is possible to suppress a deterioration in visibility, and a display device comprising the touch panel.

### Means for Solving the Problem

In order to solve the abovementioned problem, a mode of the present invention relates to a touch panel in which a plurality of parallelogram patterns comprising four wires surrounding one opening are formed by a plurality of conductor wires. The touch panel comprises: a first conduction layer including a plurality of conductor wires arranged without intersections, and a second conduction layer laminated on the first conduction layer and including a plurality of conductor wires arranged without intersections. When seen in a plan view in a state in which the first conduction layer is laminated on the second conduction layer, the conductor wires in the first conduction layer and the conductor wires in the second conduction layer are arranged intersecting in such a way that the plurality of parallelogram patterns are formed.

Furthermore, in order to solve the abovementioned problem, a mode of the present invention relates to a display device on which is laminated a touch panel in which a plurality of parallelogram patterns are formed by a plurality of conductor wires.

### Advantage of the Invention

According to a mode of the present invention, it is possible to suppress an increase in the width of the conductor wires (fine metal wires) by ensuring that the plurality of conductor wires do not intersect in the first conduction layer and the second conduction layer, respectively. It is therefore possible to suppress a deterioration in visibility in a touch panel in which a plurality of parallelogram patterns are formed by a plurality of conductor wires, and in a display device on which the touch panel is laminated.

### Brief Description of the Drawings

- Fig. 1: is a plan view showing a touch panel according to a first mode of embodiment of the present invention.
- Fig. 2: is an enlargement of the region II enclosed by the broken line in fig. 1.
- Fig. 3: is a view in cross section along the line III-III in fig. 2.
- Fig. 4: is a plan view showing the first conduction layer.
- Fig. 5: shows the ratio of the number of first main electrode wires and first auxiliary electrode wires and the number of first dummy wires.
- Fig. 6: shows a state in which a space is formed at a position of intersection of two first dummy wires.
- Fig. 7: shows processing to form a space at the position of intersection of two first dummy wires.
- Fig. 8: is a plan view showing the second conduction layer.
- Fig. 9: shows the state of lamination of the first conductor wires and the second conductor wires.
- Fig. 10: shows a touch panel formed by a square (grid) pattern. Fig. 10(a) shows a portion of a touch panel formed by a square pattern, and fig. 10(b) is an enlargement of the range enclosed by the broken line B in fig. 10(a).
- Fig. 11: shows a touch panel formed by a diamond pattern. Fig. 11(a) shows a portion of a touch panel formed by a diamond pattern, and fig. 11(b) is an enlargement of the range enclosed by the broken line B in fig. 11(a).
- Fig. 12: shows a touch panel formed by a parallelogram pattern. Fig. 12(a) shows a portion of a touch panel formed by a parallelogram pattern, and fig. 12(b) is an enlargement of the range enclosed by the broken line B in fig. 12(a).
- Fig. 13: shows a combination in which a lengthwise direction of a parallelogram shape forms an acute angle and a combination in which a widthwise direction of the parallelogram shape forms an acute angle. Fig. 13(a) shows a combination of two wires forming a parallelogram pattern. Fig. 13(b) shows a parallelogram shape formed by the angle of two wires intersecting in the range enclosed by the broken line B in fig. 13(a). Fig. 13(c) shows a parallelogram shape formed by the angle of two wires intersecting in the range enclosed by the broken line C in fig. 13(a).
- Fig. 14: shows a touch panel in which the first conductor wires and second conductor wires are set in such a way that a regular mesh (mesh pattern) is formed when seen in a plan view.
- Fig. 15: shows positions in which acute angle portions are formed, in a touch panel in which the first conductor wires and second conductor wires are set in such a way that a regular mesh is formed when seen in a plan view.
- Fig. 16: shows a touch panel in which the first conductor wires and second conductor wires are arranged irregularly (randomly) when seen in a plan view.
- Fig. 17: shows positions at which acute angle portions are formed, in a touch panel in which the first conductor wires and second conductor wires are arranged irregularly when seen in a plan view.
- Fig. 18: is a graph showing the number of designable parameters in a touch panel according to Comparative Example 1.
- Fig. 19: is a graph showing the number of designable parameters in a touch panel according to Comparative Example 2.
- Fig. 20: is a graph showing the number of designable parameters in a touch panel according to Comparative Example 3.
- Fig. 21: is a graph showing the number of designable parameters in a touch panel according to Comparative Example 4.

### Mode of Embodiment of the Invention

In the following detailed description, specific details are described in regard to modes of embodiment of the present invention in such a way as to provide a full understanding. However, one or more modes of embodiment can still obviously be implemented even without these specific details. Furthermore, known structures and devices may not be depicted in order to simplify the drawings.

### First Mode of Embodiment

A first mode of embodiment of the present invention will be described below with reference to the drawings.

### Configuration

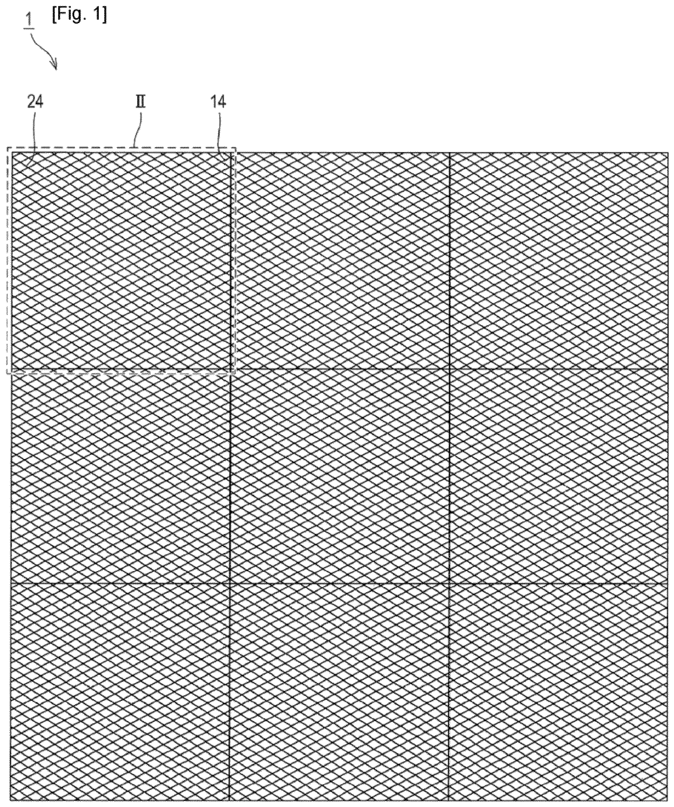

The configuration of a touch panel 1 will be described with reference to fig. 1 to fig. 9.

### Outline configuration of touch panel 1

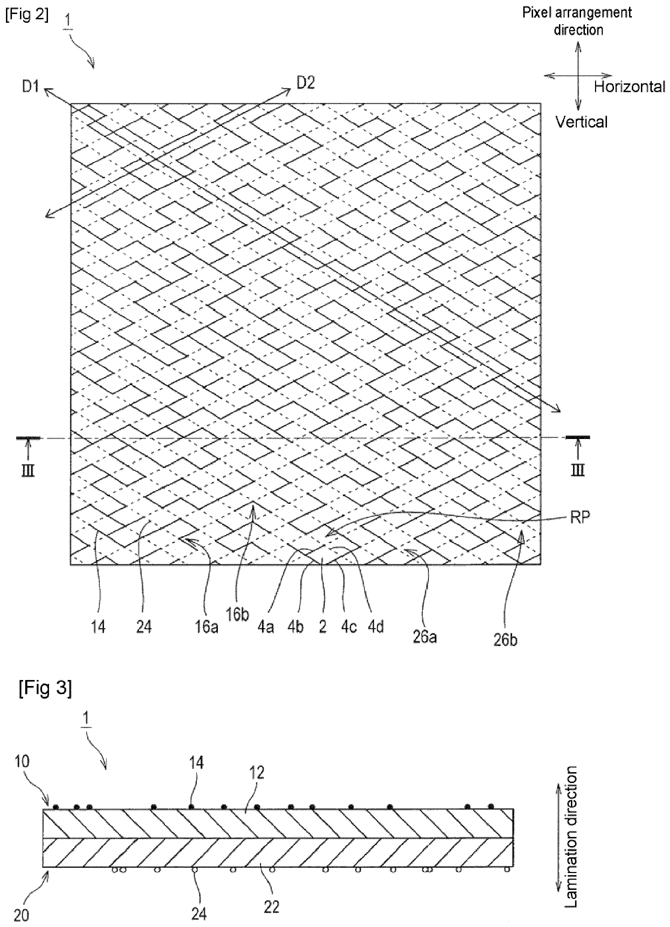

The touch panel 1 shown in fig. 1 and fig. 2 is provided in a car navigation system or the like, for example. Furthermore, the touch panel 1 is a panel comprising a plurality of detection regions corresponding to a plurality of coordinates, and forms an electrostatic-capacitive touch panel, for example.

Furthermore, the touch panel 1 is a panel which is laminated on a display panel (display device) such as a liquid crystal panel, with an adhesion member interposed.

A case in which the touch panel 1 has a shape in which the widthwise length is greater than the longitudinal length (a horizontally-long shape) will be described in the first mode of embodiment. It should be noted that fig. 1 shows nine detection regions, among the detection regions of the touch panel 1, corresponding to 9 coordinates (3 rows × 3 columns) which is the total of three coordinates arranged in the lengthwise direction (capacity detection unit: nodes) and three coordinates arranged in the widthwise direction.

Furthermore, fig. 2 shows only one detection region arranged at the top left of fig. 1, from among the nine detection regions of the touch panel 1. It should be noted that the length of one side of one detection region is set within a range of between 4 mm and 5 mm, for example. As shown in fig. 2, the touch panel 1 is a touch panel in which a plurality of parallelogram patterns RP comprising four wires 4a-4d surrounding one opening 2 are formed by a plurality of conductor wires.

Furthermore, a pattern formed in a preset range (a range of between 4 mm and 5 mm in the first mode of embodiment) such as shown in fig. 2 is formed in such a way as to repeat in the detection region. Specifically, a pattern is formed in a unit detection region, and that unit detection region is formed in such a way as to be repeated in all detection regions of the touch panel. The pattern RP is a parallelogram. Two opposite sides (the wires 4a and 4c, and the wires 4b and 4d) from among the four wires 4a-4d therefore have the same length, and the lengths of two adjacent sides (the wire 4a or 4c and the wires 4b and 4d, and the wire 4b or 4d and the wires 4a and 4c) are straight lines having different lengths.

Furthermore, the pattern RP is a parallelogram. The parallelogram pattern RP is therefore formed with two acute angles and two obtuse angles.
As one example in the first mode of embodiment, a case will be described in which the acute angles formed in the pattern RP are set within a range of between 10 ° and 89 °. As one example in the first mode of embodiment, a case will be described in which the obtuse angles formed in the pattern RP are set within a range of between 90 ° and 170 °.

It should be noted that in fig. 2, only one pattern from among the plurality of parallelogram patterns is referenced by the symbol RP for the purposes of the description. The opening 2 and the four wires 4a-4d are likewise also shown only in one case in fig. 2. Although not particularly depicted, a plurality of pixels of the display device on which the touch panel 1 is laminated are arranged along a horizontal direction and a vertical direction in fig. 2. It should be noted that the directions in which the pixels are arranged in fig. 2 are represented as "Pixel arrangement direction, Horizontal, Vertical".

The plurality of parallelogram patterns RP are arranged along a first direction D1 and a second direction D2 intersecting the first direction D1.
The first direction D1 is inclined with respect to the direction in which the plurality of pixels are arranged. As shown in fig. 3, the touch panel 1 comprises a first conduction layer 10 and a second conduction layer 20.

Fig. 3 is a diagram relating to a configuration in which first conductor wires 14 are provided on one surface (the upper surface in fig. 3) of the first conduction layer 10 (first substrate 12), and second conductor wires 24 are provided on one surface (the lower surface in fig. 3) of the second conduction layer 20 (second substrate 22). It should be noted that the form in which the first conduction layer 10 and the second conduction layer 20 are laminated may be such that the first conductor wires 14 and the second conductor wires 24 formed on each are arranged facing the side of the first conduction layer 10 and the second conduction layer 20 either above or below.

Furthermore, when the first conductor wires 14 and the second conductor wires 24 are arranged directly facing, the first conductor wires 14 and the second conductor wires 24 must be arranged with an insulating material such as an adhesive interposed so as to avoid short-circuiting between the first conductor wires 14 and the second conductor wires 24. Moreover, it is equally possible to adopt a configuration in which the first conductor wires 14 and the second conductor wires 24 are formed on a front surface and a rear surface of a common (single) insulating substrate serving as both the first conduction layer 10 and the second conduction layer 20.

As one example in the first mode of embodiment, a case will be described in which the first conduction layer 10 forms a sensing layer of the touch panel 1. Furthermore, the first conduction layer 10 includes the first substrate 12 and the plurality of conductor wires (referred to as the "first conductor wires 14" in the drawings and the subsequent description) arranged without intersections. The first substrate 12 is formed using a transparent material such as glass or a resin film.

It should be noted that, for the purposes of the description, the first conductor wires 14 are shown by solid lines in fig. 1 and fig. 2, and the first conductor wires 14 are shown by black circles in fig. 3. Furthermore, fig. 3 shows only the portions of the first conductor wires 14 lying over the cross section on the line III-III of the first conduction layer 10. It should be noted that the detailed configuration of the first conduction layer 10 will be described later. As shown in fig. 3, the second conduction layer 20 is laminated on the first conduction layer 10. It should be noted that in fig. 3, the lamination direction of the first conduction layer 10 and the second conduction layer 20 is shown by the double arrow as "Lamination direction".

As one example in the first mode of embodiment, a case will be described in which the second conduction layer 20 forms a drive layer of the touch panel 1. Furthermore, the second conduction layer 20 includes the second substrate 22 and the plurality of conductor wires (referred to as the "second conductor wires 24" in the drawings and the subsequent description) arranged without intersections. The second substrate 22 is formed using a transparent material such as glass or a resin film, in the same way as the first substrate 12.

It should be noted that, for the purposes of the description, the second conductor wires 24 are shown by solid lines in fig. 1, the second conductor wires 24 are shown by broken lines in fig. 2, and the second conductor wires 24 are shown by white circles in fig. 3. Furthermore, fig. 3 shows only the portions of the second conductor wires 24 lying over the cross section on the line III-III of the second conduction layer 20. It should be noted that the detailed configuration of the second conduction layer 20 will be described later.

As shown in fig. 2, when seen in a plan view in a state in which the first conduction layer 10 is laminated on the second conduction layer 20, the plurality of first conductor wires 14 and the plurality of second conductor wires 24 are arranged intersecting in such a way that the plurality of parallelogram patterns RP are formed. It should be noted that the abovementioned plan view is a visual point following the lamination direction of the first conduction layer 10 and the second conduction layer 20.

According to the abovementioned configuration, when a conductor such as a fingertip is not in contact with the touch panel 1, lines for electrical power generated as a result of a voltage being applied to the second conduction layer 20 forming the drive layer are present between the second conduction layer 20 and the first conduction layer 10 forming the sensing layer. When a conductor such as a fingertip is placed in contact with the touch panel 1, a portion of the electrical power lines is earthed by way of the conductor such as a fingertip. The electrostatic capacity between the second conduction layer 20 and the first conduction layer 10 therefore decreases. The contact position of the conductor such as a fingertip on the operating surface of the touch panel 1 is thus detected by a change in electrostatic capacity.

### Configuration of first conduction layer 10

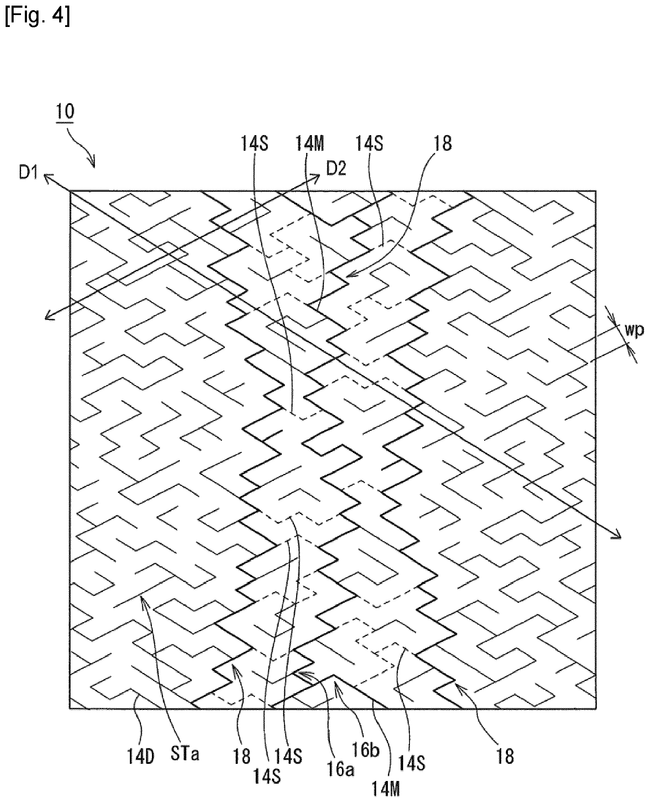

The detailed configuration of the first conduction layer 10 will be described with reference to fig. 1 to fig. 3, and with the aid of fig. 4 to fig. 7. The plurality of first conductor wires 14 are metal wires formed using gold (Au), silver (Ag), copper (Cu), or the like, for example.

As one example in the first mode of embodiment, a case will be described in which the first conductor wires 14 are formed using copper. The width (thickness) of the first conductor wires 14 is set at 30 µm or less. This is the same as the width (thickness) of the second conductor wires 24. As one example in the first mode of embodiment, a case will be described in which the width of the first conductor wires 14 is set within a range of between 2 µm and 7 µm. The same also applies to the width of the second conductor wires 24.

The first conductor wires 14 are arranged along either the first direction D1 or the second direction D2. The plurality of first conductor wires 14 arranged along the first direction D1 are arranged in parallel. The plurality of first conductor wires 14 arranged along the second direction D2 are arranged in parallel. That is to say, the first conductor wires 14 which are the conductor wires in the first conduction layer 10 are arranged in parallel.

When seen in a plan view, the point at which the first conductor wires 14 are joined is such that two first conductor wires 14 are joined in any of a linear shape, a "T" shape or an "L" shape. That is to say, a first conductor wire 14 extending along the second direction D2 is joined to at least one first conductor wire 14 extending along the first direction D1.

It should be noted that a "T shape" is a shape in which the angles at two locations formed by the two joined first conductor wires 14 are an acute angle and an obtuse angle. Furthermore, an "L shape" is a shape in which the angle at one location formed by the two joined first conductor wires 14 is an acute angle or an obtuse angle.

As a result, portions where the first conductor wires 14 intersect are not formed in the first conduction layer 10. The length of a linear portion of the first conductor wires 14 is set at between one and 10 times a pitch WP (wire pitch) constituting the length of one wire from among the four wires (see fig. 2) surrounding one opening 2.

As one example in the first mode of embodiment, a case will be described in which the length of the linear portion of the first conductor wires 14 is set at between one and four times the pitch WP. Moreover, in fig. 4, one linear portion from among the linear portions of the first conductor wires 14 which is set with a length of three times the pitch WP is shown by the reference symbol STa. Furthermore, the pitch WP is set within a range of between 100 µm and 400 µm, for example. The same also applies to the second conduction layer 20.

Furthermore, as one example in the first mode of embodiment, a case will be described in which the configuration of the first conductor wires 14 is such that in the first conduction layer 10, one opening 2 is surrounded by only the first conductor wires 14, and the four wires that form the parallelogram patterns RP (see fig. 2) are not formed. Furthermore, a first acute angle portion 16a at which the angle formed by two joined first conductor wires 14 is an acute angle, and a first obtuse angle portion 16b at which the angle formed by two joined first conductor wires 14 is an obtuse angle are formed at a joining point where two first conductor wires 14 are joined, when seen in a plan view. It should be noted that in fig. 4, only one of the first acute angle portions from among the plurality of first acute angle portions formed is shown by the reference symbol 16a. Likewise, in fig. 4, only one of the first obtuse angle portions from among the plurality of first obtuse angle portions formed is shown by the reference symbol 16b.

In addition, the first conductor wires 14 are arranged irregularly (randomly) when seen in a plan view. Specifically, the pitch WP of the first conductor wires 14 and the direction (first direction D1 or second direction D2) in which the first conductor wires 14 extend are set in such a way that the four sides surrounding one opening are not formed solely by the first conductor wires 14. The plurality of first conductor wires 14 comprise a plurality of main electrode wires, a plurality of auxiliary electrode wires, and a plurality of dummy wires.

It should be noted that in fig. 4 and the subsequent description, the main electrode wires of the first conductor wires 14 are referred to as "first main electrode wires 14M", the auxiliary electrode wires of the first conductor wires 14 are referred to as "first auxiliary electrode wires 14S", and the dummy wires of the first conductor wires 14 are referred to as "first dummy wires 14D". Furthermore, for the purposes of the description, the first main electrode wires 14M are represented by solid lines in fig. 4, the first auxiliary electrode wires 14S are represented by broken lines, and the first dummy wires 14D are represented by solid lines narrower than those representing the first main electrode wires 14M.

The first main electrode wires 14M and the first auxiliary electrode wires 14S are connected to an electrode which is not depicted. Moreover, although not particularly depicted, the plurality of first main electrode wires 14M constituting the same node form one group. Accordingly, the first auxiliary electrode wires 14S are connected to the electrode which is not depicted via the first main electrode wires 14M forming one group. The plurality of first main electrode wires 14M of the first conductor wires 14 form a plurality of first main electrode wire groups 18.

As one example in the first mode of embodiment, as shown in fig. 4, a case will be described in which the plurality of first main electrode wires 14M of the first conductor wires 14 form three first main electrode wire groups 18 in one detection region. The three first main electrode wire groups 18 constitute a pattern which is continuous in a preset direction (the lengthwise direction in fig. 4) in one detection region, as shown in fig. 4.

The first auxiliary electrode wires 14S join the plurality of different first main electrode wire groups 18. That is to say, three first main electrode wire groups 18 are joined only by the first auxiliary electrode wires 14S.
The joining point of the first auxiliary electrode wires 14S and the first main electrode wire groups 18 is formed in such a way that an end of the first auxiliary electrode wires 14S is connected between both ends of the first main electrode wire groups 18. That is to say, one end of the first auxiliary electrode wires 14S is joined between ends of the linear portions of the first main electrode wires 14M in the first conduction layer 10.
The first dummy wires 14D are not connected to the first main electrode wires 14M or the first auxiliary electrode wires 14S, and are electrically insulated from the electrode. Furthermore, in the first conduction layer 10, at an intersection of at least one set of electrode wires out of the first main electrode wires 14M and the first auxiliary electrode wires 14S, and the first dummy wires 14D, the ratio of the number of first main electrode wires 14M and first auxiliary electrode wires 14S, and the number of first dummy wires 14D is preset.

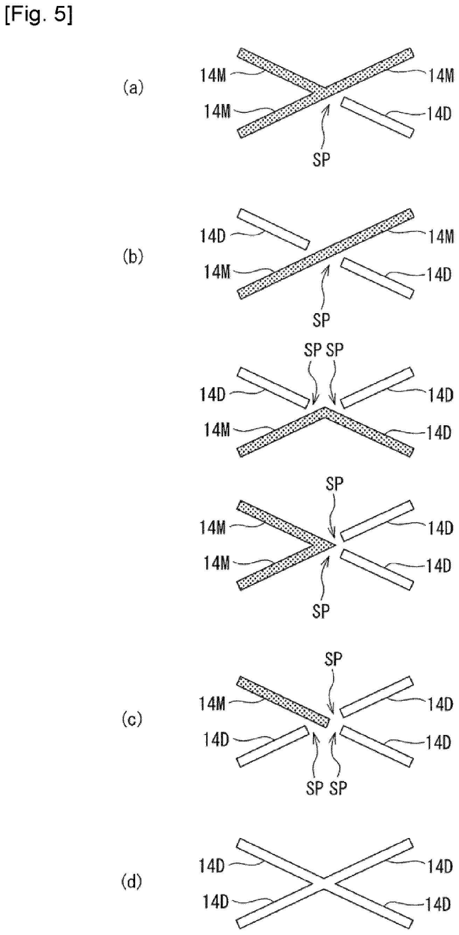

Specifically, the ratio of the number of first main electrode wires 14M and first auxiliary electrode wires 14S and the number of first dummy wires 14D, from among the four wires forming the abovementioned intersection is any one of 3:1, 2:2, 1:3 and 0:4, as shown in fig. 5(a) to fig. 5(d).
It should be noted that in fig. 5(a) to fig. 5(c), four wires formed by intersection of the first main electrode wires 14M and the first dummy wires 14D are shown. The configuration is therefore still the same when the first main electrode wires 14M in fig. 5(a) to fig. 5(c) are substituted with the first auxiliary electrode wires 14S.

Furthermore, fig. 5(a) shows a state in which the ratio of the number of first main electrode wires 14M and first auxiliary electrode wires 14S, and the number of first dummy wires 14D, from among the four wires forming the abovementioned intersection is 3:1. In the same way, fig. 5(b) shows a state in which the ratio of the number of first main electrode wires 14M and first auxiliary electrode wires 14S, and the number of first dummy wires 14D, from among the four wires forming the abovementioned intersection is 2:2.

In addition, fig. 5(c) shows a state in which the ratio of the number of first main electrode wires 14M and first auxiliary electrode wires 14S, and the number of first dummy wires 14D, from among the four wires forming the abovementioned intersection is 1:3. Fig. 5(d) shows a state in which the ratio of the number of first main electrode wires 14M and first auxiliary electrode wires 14S, and the number of first dummy wires 14D, from among the four wires forming the abovementioned intersection is 0:4.

That is to say, according to the first mode of embodiment, the ratio of electrode wires and dummy wires at an intersection between at least one set of electrode wires out of the main electrode wires and the auxiliary electrode wires, and the dummy wires, at an intersection between said at least one set of electrode wires and the dummy wires, expressed as electrode wires: dummy wires, is any one of 3:1, 2:2, 1:3 and 0:4.
Furthermore, as shown in fig. 5(a) to fig. 5(c), a space SP is formed at the portion where the first dummy wires 14D and the first main electrode wires 14M connect to form an acute angle.

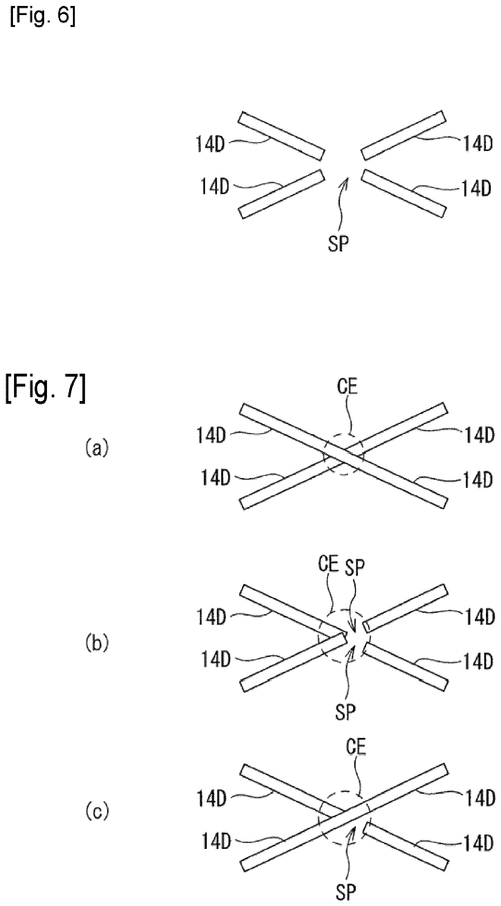

In the same way, although not depicted, a space SP is formed at the portion where the first dummy wires 14D and the first auxiliary electrode wires 14S connect to form an acute angle (see fig. 5(a) to fig. 5(c)). Furthermore, as shown in fig. 5(d), a space SP is formed at the portion where two first dummy wires 14D intersect to form an acute angle, as shown in fig. 6.

That is to say, in the example shown in fig. 6, a portion of the first dummy wires 14D is removed to form the space SP on both of the two first dummy wires 14D which intersect to form an acute angle, in such a way that the portion where two first dummy wires 14D intersect to form an acute angle is removed. A configuration in which the space SP is formed at the portion where two first dummy wires 14D intersect to form an acute angle is not limited to the example shown in fig. 6. That is to say, it is equally possible to remove the position of intersection of the first dummy wires 14D in a region surrounded by the circle CE in fig. 7(a) (processing region) by means of trimming or the like, so as to form the space SP, as shown in fig. 7(b) and fig. 7(c).

That is to say, in the example shown in fig. 7(b), a portion of the first dummy wires 14D is removed to form the space SP on both of two first dummy wires 14D which intersect to form an acute angle, in such a way that the portion where two first dummy wires 14D intersect to form an acute angle remains. In addition to this, in the example shown in fig. 7(b), one of the angle portions formed by the intersection of two first dummy wires 14D remains.

Furthermore, in the example shown in fig. 7(c), a portion of a first dummy wire 14D is removed to form the space SP on only one of the two first dummy wires 14D which intersect to form an acute angle, in such a way that a portion where two first dummy wires 14D intersect remains.
It should be noted that in the examples shown in fig. 5(a) to fig. 5(c), the first dummy wires 14D and the first main electrode wires 14M are intersecting, but the first dummy wires 14D are not connected to the electrode so an acute angle is not formed by the first dummy wires 14D and the first main electrode wires 14M.

Furthermore, in the examples shown in fig. 5(a) and fig. 5(b), the first main electrode wires 14M form an acute angle, but an acute angle is not formed by the first main electrode wires 14M and the first dummy wires 14D. An acute angle is therefore not formed by the first main electrode wires 14M and the first dummy wires 14D if even one conductor wire of the same conduction layer (first conduction layer 10) is present, as in the example shown in fig. 5(c).

Furthermore, since there is no need for the first dummy wires 14D to be connected, the intersecting first dummy wires 14D are all arranged in an isolated manner in the example shown in fig. 5(d). An acute angle is therefore not formed by the first dummy wires 14D. According to the first mode of embodiment, the configuration of the positions of intersection of the first conductor wires 14 is shown in fig. 5 and fig. 6. As a result, in the configuration of the first mode of embodiment, the first dummy wires 14D do not intersect at an acute angle when seen in a plan view. This configuration is also the same for the second conduction layer 20.

### Configuration of second conduction layer 20

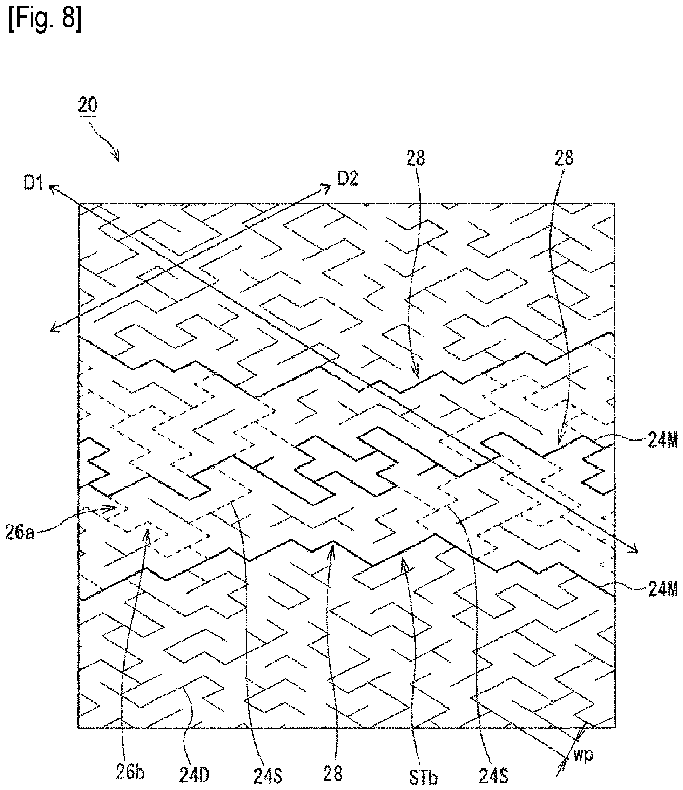

The detailed configuration of the second conduction layer 20 will be described with reference to fig. 1 to fig. 7 and with the aid of fig. 8.
It should be noted that constituent elements which are the same as those of the first conduction layer 10 may not be described again. The plurality of second conductor wires 24 are metal wires formed using gold (Au), silver (Ag), copper (Cu), or the like, for example, in the same way as for the first conductor wires 14.

As one example in the first mode of embodiment, a case will be described in which the second conductor wires 24 are formed using copper.
The second conductor wires 24 are arranged along either the first direction D1 or the second direction D2 in the same way as the first conductor wires 14. The plurality of second conductor wires 24 arranged along the first direction D1 are arranged in parallel. The plurality of second conductor wires 24 arranged along the second direction D2 are arranged in parallel.
That is to say, the second conductor wires 24 which are the conductor wires in the second conduction layer 20 are arranged in parallel.

When seen in a plan view, the point at which the second conductor wires 24 are joined is such that two second conductor wires 24 are joined in any of a linear shape, a "T" shape or an "L" shape, in the same way as the point at which the first conductor wires 14 are joined. That is to say, a second conductor wire 24 extending along the second direction D2 is joined to at least one second conductor wire 24 extending along the first direction D1.

It should be noted that a "T shape" is a shape in which the angles at two locations formed by the two joined second conductor wires 24 are an acute angle and an obtuse angle. Furthermore, an "L shape" is a shape in which the angle at one location formed by the two joined second conductor wires 24 is an acute angle or an obtuse angle. As a result, portions where the second conductor wires 24 intersect are not formed in the second conduction layer 20.

The length of a linear portion of the second conductor wires 24 is set at between one and 10 times the pitch WP (wire pitch) constituting the length of one wire from among the four wires surrounding one opening 2.
As one example in the first mode of embodiment, a case will be described in which the length of the linear portion of the second conductor wires 24 is set at between one and four times the pitch WP.

Moreover, in fig. 8, one linear portion from among the linear portions of the second conductor wires 24 which is set with a length of three times the pitch WP is shown by the reference symbol STb. Furthermore, as one example in the first mode of embodiment, a case will be described in which the configuration of the second conductor wires 24 is such that in the second conduction layer 20, one opening 2 is surrounded by only the second conductor wires 24, and the four wires that form the parallelogram patterns RP (see fig. 2) are not formed.

Furthermore, a second acute angle portion 26a at which the angle formed by two joined second conductor wires 24 is an acute angle, and a second obtuse angle portion 26b at which the angle formed by two joined second conductor wires 24 is an obtuse angle are formed at a joining point where two second conductor wires 24 are joined, when seen in a plan view. It should be noted that in fig. 8, only one of the second acute angle portions from among the plurality of second acute angle portions formed is shown by the reference symbol 26a. Likewise, in fig. 8, only one of the second obtuse angle portions from among the plurality of second obtuse angle portions formed is shown by the reference symbol 26b.

In addition, the second conductor wires 24 are arranged irregularly (randomly) when seen in a plan view, in the same way as the first conductor wires 14. Specifically, the pitch WP of the second conductor wires 24 and the direction (first direction D1 or second direction D2) in which the second conductor wires 24 extend are set in such a way that the four sides surrounding one opening are not formed solely by the second conductor wires 24.

Accordingly, the first conductor wires 14 which are the conductor wires in the first conduction layer 10 and the second conductor wires 24 which are the conductor wires in the second conduction layer 20 are arranged irregularly when seen in a plan view. Since the first conductor wires 14 and the second conductor wires 24 are arranged irregularly, they are set in such a way that a regular mesh (mesh pattern) is not formed. It should be noted that a "regular mesh" is a state in which, for example, a plurality of conductor wires in which straight lines having the same pitch extend alternately towards the first direction D1 and the second direction D2 form a plurality of lines forming the same shape, and a plurality of spaces surrounded by these lines are further formed.

Accordingly, the positions at which the angle formed by two joined conductor wires is an acute angle are also randomly arranged at the positions of the joining points of the first conductor wires 14 and the joining points of the second conductor wires 24 where the join is formed by a "T shape" and an "L shape". The plurality of second conductor wires 24 comprise a plurality of main electrode wires, a plurality of auxiliary electrode wires, and a plurality of dummy wires.

It should be noted that in fig. 8 and the subsequent description, the main electrode wires of the second conductor wires 24 are referred to as "second main electrode wires 24M", the auxiliary electrode wires of the second conductor wires 24 are referred to as "second auxiliary electrode wires 24S", and the dummy wires of the second conductor wires 24 are referred to as "second dummy wires 24D". Furthermore, for the purposes of the description, the second main electrode wires 24M are represented by solid lines in fig. 8, the second auxiliary electrode wires 24S are represented by broken lines, and the second dummy wires 24D are represented by solid lines narrower than those representing the second main electrode wires 24M.

The second main electrode wires 24M and the second auxiliary electrode wires 24S are connected to an electrode which is not depicted. Moreover, although not particularly depicted, the plurality of second main electrode wires 24M constituting the same node form one group. Accordingly, the second auxiliary electrode wires 24S are connected to the electrode which is not depicted via the second main electrode wires 24M forming one group. The plurality of second main electrode wires 24M of the second conductor wires 24 form a plurality of second main electrode wire groups 28.

As one example in the first mode of embodiment, as shown in fig. 8, a case will be described in which the plurality of second main electrode wires 24M of the second conductor wires 24 form three second main electrode wire groups 28 in one detection region. The three second main electrode wire groups 28 constitute a pattern which is continuous in a preset direction (the widthwise direction in fig. 8) in one detection region, as shown in fig. 8.

That is to say, the continuation direction of the first main electrode wire groups 18 in the first conduction layer 10 and the continuation direction of the second main electrode wire groups 28 in the second conduction layer 20 are intersecting. The second auxiliary electrode wires 24S join the plurality of different second main electrode wire groups 28. That is to say, three second main electrode wire groups 28 are joined only by the second auxiliary electrode wires 24S. The joining point of the second auxiliary electrode wires 24S and the second main electrode wire groups 28 is formed in such a way that an end of the second auxiliary electrode wires 24S is connected between both ends of the second main electrode wire groups 28, in the same way as the joining point of the first auxiliary electrode wires 14S and the first main electrode wires 14M.

That is to say, one end of the second auxiliary electrode wires 24S is joined between ends of the linear portions of the second main electrode wires 24M in the second conduction layer 20. Accordingly, in the first mode of embodiment, one end of the auxiliary electrode wires is joined between the ends of the linear portions of the main electrode wires in at least one of the first conduction layer 10 and the second conduction layer 20.

The second dummy wires 24D are not connected to the second main electrode wires 24M or the second auxiliary electrode wires 24S, and are electrically insulated from the electrode. Furthermore, in the second conduction layer 20, at an intersection of at least one set of electrode wires out of the second main electrode wires 24M and the second auxiliary electrode wires 24S, and the second dummy wires 24D, the ratio of the number of second main electrode wires 24M and second auxiliary electrode wires 24S, and the number of second dummy wires 24D is preset.

Specifically, the ratio of the number of second main electrode wires 24M and second auxiliary electrode wires 24S and the number of second dummy wires 24D, from among the four wires forming the abovementioned intersection is any one of 3:1, 2:2, 1:3 and 0:4 (see fig. 5(a) to fig. 5(d)).
Furthermore, a space is formed between the second dummy wires 24D and the second main electrode wires 24M (see fig. 5(a) to fig. 5(c)), in the same way as in the first conduction layer 10.

In the same way, a space is formed between the second dummy wires 24D and the second auxiliary electrode wires 24S (see fig. 5(a) to fig. 5(c)).
Furthermore, a space is formed at the position of the intersection of two second dummy wires 24D (see fig. 5(d), fig. 6, and fig. 7(a) to fig. 7(c)).

### State of lamination of the first conductor wires 14 and second conductor wires 24

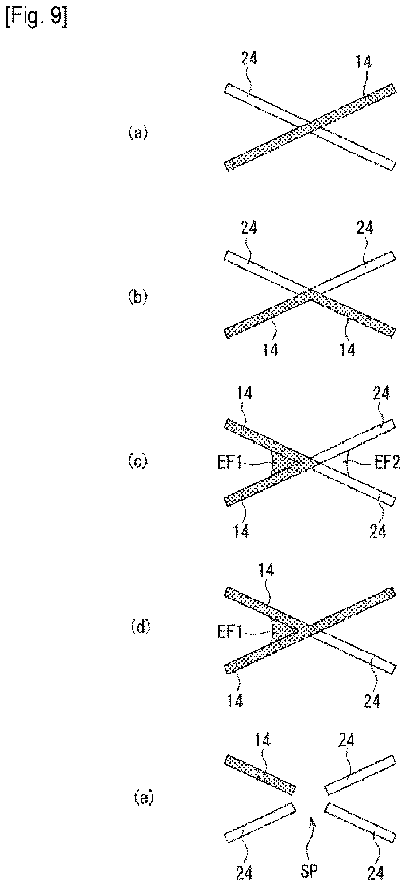

The state of lamination of the first conductor wires 14 and the second conductor wires 24 will be described with reference to fig. 1 to fig. 8, and with the aid of fig. 9. By virtue of the abovementioned configuration, when seen a plan view in a state in which the first conduction layer 10 is laminated on the second conduction layer 20, the combined state of the first conductor wires 14 and the second conductor wires 24 is the state shown in fig. 9.

As shown in fig. 9(a), the state of intersection of the first conductor wires 14 and the second conductor wires 24 is not a state in which the first conductor wires 14 intersect in the first conduction layer 10, nor is it a state in which the second conductor wires 24 intersect in the second conduction layer 20. A state is therefore not produced in which the width of the conductor wires is greater than in other portions (portions where the conductor wires are spaced apart, etc.) due to etching residue or the like from wet etching.

It should be noted that the state shown in fig. 9(a) includes a state in which, when seen in a plan view, linear portions of the main electrode wires (first main electrode wires 14M) in the first conduction layer 10 intersect linear portions of the main electrode wires (second main electrode wires 24M in the second conduction layer 20. The state shown in fig. 9(a) further includes a state in which linear portions of the auxiliary electrode wires (first auxiliary electrode wires 14S) in the first conduction layer 10 intersect linear portions of the auxiliary electrode wires (second auxiliary electrode wires 24S) in the second conduction layer 20.

As shown in fig. 9(b), even if a state in which the wire width is increased is produced, the wire width is increased by only a small amount in a state in which the first conductor wires 14 and the second conductor wires 24 are connected at an obtuse angle rather than an acute angle. As shown in fig. 9(c), an acute angle is formed in two locations in a state in which the first conductor wires 14 and the second conductor wires 24 are connected at an acute angle rather than an obtuse angle, so the increase in wire width has a large effect. Thick portions EF at two locations (EF1, EF2) are therefore produced by etching residue, etc. at the respective portions where an acute angle is formed.

As shown in fig. 9(d), an acute angle is formed at one location in a state in which only the first conductor wires 14 are connected at an obtuse angle rather than an acute angle, so a thick portion EF (EF1) at one location is formed at the portion where the acute angle is formed. It should be noted that although not particularly depicted, an acute angle is also formed at one location in a state in which only the second conductor wires 24 are connected at an obtuse angle rather than an acute angle, so a thick portion EF at one location is formed at the portion where the acute angle is formed, in the same way as the state in which only the first conductor wires 14 are connected at an obtuse angle.

As shown in fig. 9(e), the first conductor wires 14 and the second conductor wires 24 are not connected at the portion where the first conductor wires 14 and the second conductor wires 24 intersect to form an acute angle, in a state in which the space SP is formed, so an acute angle is not formed and a state in which the wire width increases is not produced.
In light of the above, the aperture ratio (transmission ratio) of the opening 2 is reduced by the thick portion EF and visibility deteriorates in the states shown in fig. 9(c) and fig. 9(d), in other words, in a state in which the thick portions EF are formed, when seen in a plan view in a state in which the first conduction layer 10 is laminated on the second conduction layer 20.

### Action

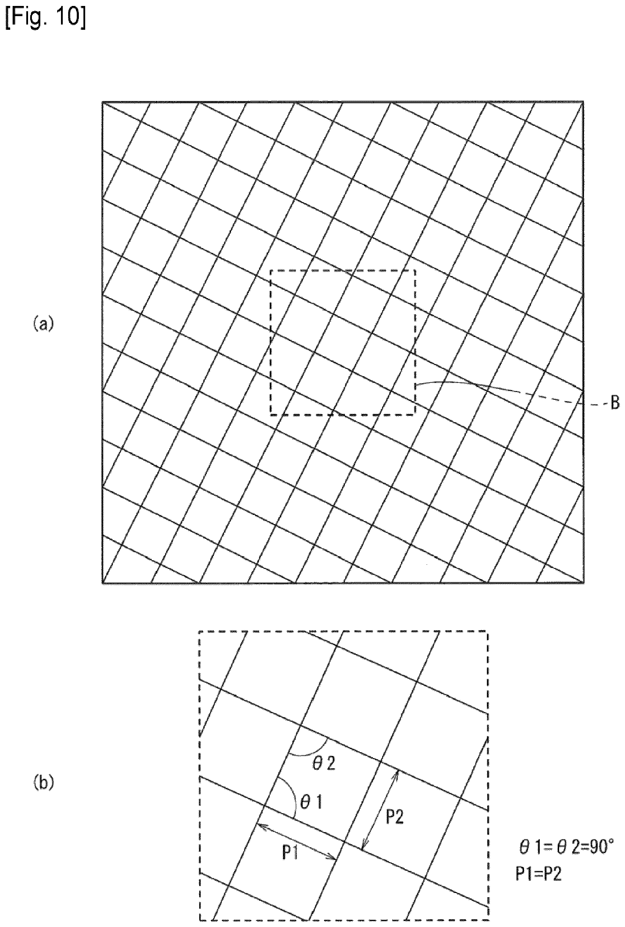

The action of the first mode of embodiment will be described with reference to fig. 1 to fig. 9, and with the aid of fig. 10 to fig. 17. When a display device (portable communication terminal such as a mobile telephone or a notebook PC) comprising the touch panel 1 according to the first mode of embodiment is used, a user contacts the touch panel 1 with a fingertip or the like, aiming to contact the position (coordinates) of an icon or the like displayed on a display unit (screen).

The change in electrostatic capacity between one first conductor wire 14 and the plurality of second conductor wires 24 is detected in each first conductor wire 14 of the touch panel 1 which has been contacted by a fingertip or the like, and the contact position (coordinates) of the fingertip or the like on the operating surface of the touch panel 1 is detected.
Here, as described above, the touch panel 1 according to the first mode of embodiment has the parallelogram pattern RP comprising the four wires 4a-4d surrounding one opening 2, and this pattern is formed by a plurality of conductor wires (first conductor wires 14, second conductor wires 24).

The touch panel 1 comprises the first conduction layer 10 including the plurality of conductor wires (first conductor wires 14) arranged without intersections, and the second conduction layer 20 laminated on the first conduction layer 10 and including the plurality of conductor wires (second conductor wires 24) arranged without intersections. In addition to this, when seen in a plan view in a state in which the first conduction layer 10 is laminated on the second conduction layer 20, the first conductor wires 14 and the second conductor wires 24 are arranged in such a way that the plurality of parallelogram patterns RP are formed.

As a result, it is possible to suppress an increase in the widths of the conductor wires by ensuring that the plurality of conductor wires do not intersect in the first conduction layer 10 and the second conduction layer 20, respectively. As described above, the touch panel 1 according to the first mode of embodiment makes it possible to suppress a deterioration in visibility in the case of a touch panel 1 in which the plurality of parallelogram patterns RP are formed by the plurality of conductor wires.

Furthermore, the touch panel 1 according to the first mode of embodiment is formed by the parallelogram patterns RP, so it is possible to improve the degree of design freedom in comparison with a touch panel formed by a square (grid) pattern and a touch panel formed by a diamond-shaped pattern. The action by which the touch panel 1 according to the first mode of embodiment is able to improve the degree of design freedom will be described below with the aid of fig. 10 to fig. 13.

As shown in fig. 10, when a touch panel is formed by a square (grid) pattern, the configuration of the pattern is such that all angles are the same (θ1=θ2=90°), and all of the pitches are also equal (P1=P2). It should be noted that fig. 10(a) shows a portion of a touch panel formed by a square (grid) pattern, and fig. 10(b) is an enlargement of the range enclosed by the broken line B in fig. 10(a).

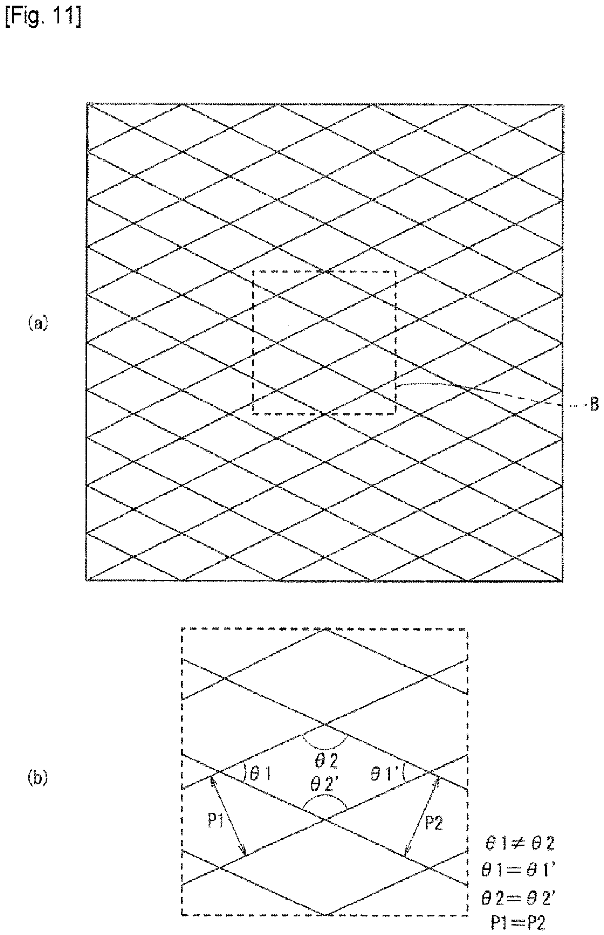

As shown in fig. 11, when the touch panel is formed by a diamond-shaped pattern, the configuration of the pattern is such that adjacent angles are different (θ1≠(θ2), and opposite angles are equal (θ1=θ1', θ2=θ2'). In addition to this, all of the pitches are equal (P1=P2). Fig. 11(a) shows a portion of a touch panel formed by a diamond-shaped pattern, and fig. 11(b) is an enlargement of the range enclosed by the broken line B in fig. 11(a).

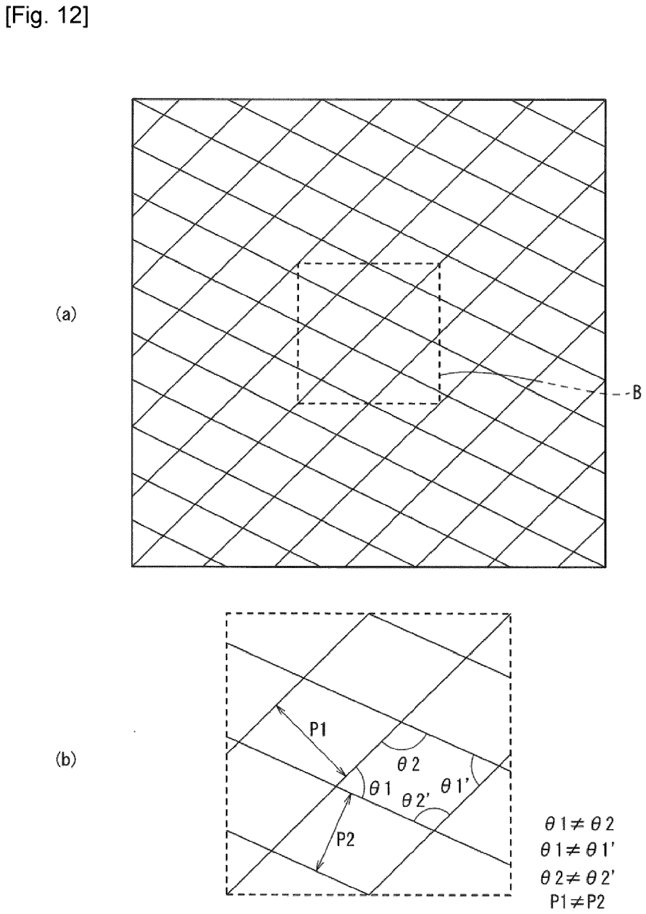

As shown in fig. 12, when the touch panel 1 is formed by a parallelogram pattern RP, the configuration of the pattern is such that adjacent angles are different (θ1≠θ2), and opposite angles are equal (θ1=θ1', θ2=θ2'). In addition to this, adjacent pitches are different (P1≠P2), and opposite pitches are equal (P1=P1', P2=P2'). It should be noted that fig. 12(a) shows a portion of a touch panel formed by a parallelogram pattern, and fig. 12(b) is an enlargement of the range enclosed by the broken line B in fig. 12(a).

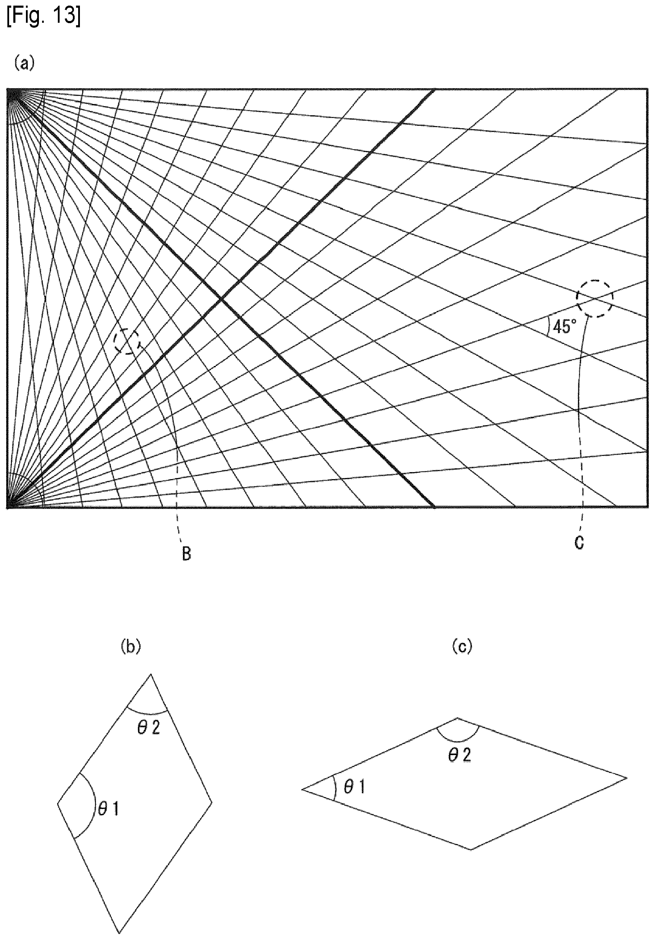

When the touch panel 1 is formed by a parallelogram pattern RP as in the first mode of embodiment, the combination of opposite angles constitutes a combination in which an acute angle is formed in the lengthwise direction of the parallelogram and a combination in which an obtuse angle is formed in the widthwise direction of the parallelogram, as shown in fig. 13. Moreover, fig. 13(a) shows a combination of two wires forming the parallelogram pattern, and in the drawing, "45°" is shown in relation to two wires intersecting at 45 °. Furthermore fig. 13(b) shows a parallelogram formed by angles of two intersecting wires in the range enclosed by the broken line B in fig. 13(a), where the widthwise angle which is an obtuse angle (120 °) is represented by "θ1", and the lengthwise angle which is an acute angle (60 °) is represented by "θ2". Furthermore, fig. 13(c) shows a parallelogram formed by angles of two intersecting wires in the range enclosed by the broken line C in fig. 13(a), where the widthwise angle which is an acute angle (44 °) is represented by "θ1", and the lengthwise angle which is an obtuse angle (136 °) is represented by "θ2".

That is to say, the lengthwise acute angle of the parallelogram pattern RP is formed when θ1 (widthwise angle) > θ2 (lengthwise angle). Furthermore, the widthwise acute angle of the parallelogram pattern RP is formed when θ1 (widthwise angle) < θ2 (lengthwise angle). As described above, the parallelogram pattern RP not only has different adjacent angles but also has different adjacent pitches in comparison with a square (grid) pattern or a diamond-shaped pattern. The parallelogram pattern RP therefore increases the breadth of combinations of angle and pitch which can be designed in comparison with a square pattern or a diamond-shaped pattern. Accordingly, it is possible to increase the degree of design freedom.

Furthermore, the touch panel 1 of the first mode of embodiment is set in such a way that the first conductor wires 14 and the second conductor wires 24 are irregularly (randomly) arranged when seen in a plan view, and a regular mesh (mesh pattern) is not formed. It is therefore possible to reduce the acute angle portion formed by the first conductor wires 14 and the acute angle portion formed by the second conductor wires 24 in comparison with a case in which the first conductor wires 14 and the second conductor wires 24 are set in such a way that a regular mesh is formed when seen in a plan view. As a result, it is possible to reduce the portions where a thick portion EF is produced.

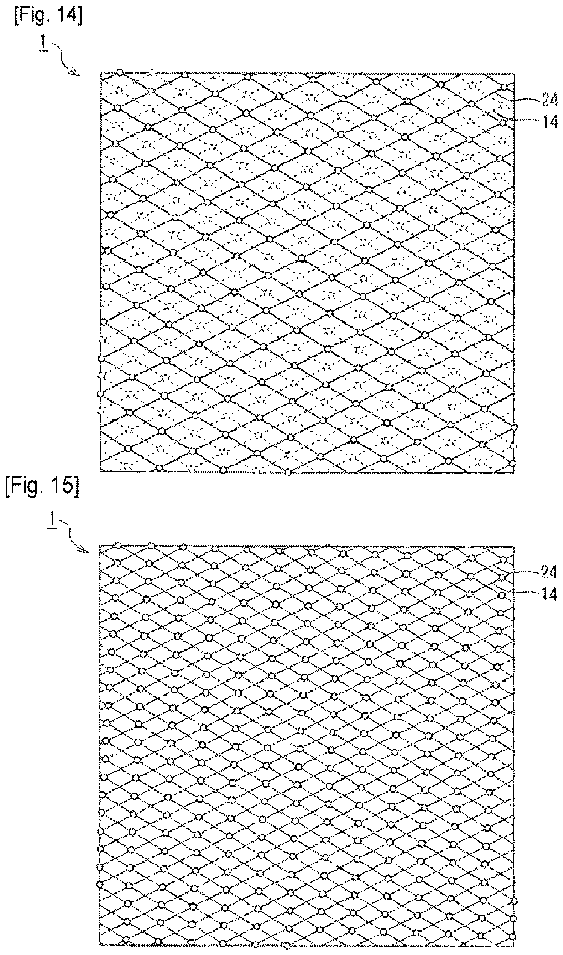

The action by which the touch panel 1 according to the first mode of embodiment makes it possible to reduce the portions where a thick portion EF is produced will be described below with the aid of fig. 14 to fig. 17.
As shown in fig. 14 and fig. 15, in a touch panel 1 in which the first conductor wires 14 and the second conductor wires 24 are set in such a way that a regular mesh (mesh pattern) is formed when seen in a plan view, acute angle portions are formed at 541 locations. Furthermore, as shown in fig. 15, in a touch panel 1 in which the first conductor wires 14 and the second conductor wires 24 are set in such a way that a regular mesh is formed when seen in a plan view, the positions at which the acute angle portions are formed are regularly arranged so thick intersections are regularly arranged in rows.
It should be noted that "acute angle portions" constitute acute angle portions formed by the first conductor wires 14 alone, and acute angle portions formed by the second conductor wires 24 alone. Furthermore, the "acute angle portions" are represented by white circles in fig. 14 and fig. 15.

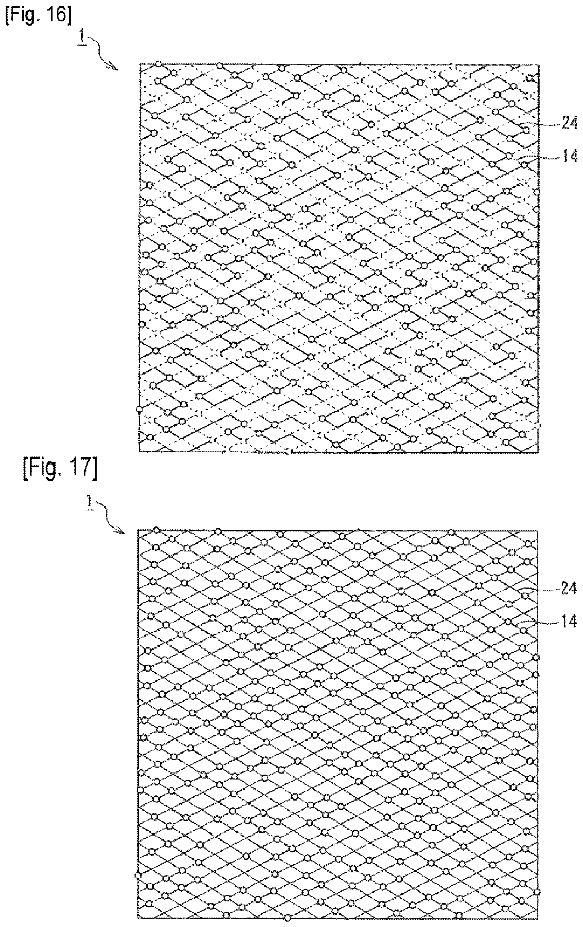

In contrast to this, in the touch panel 1 according to the first mode of embodiment, the first conductor wires 14 and the second conductor wires 24 are irregularly (randomly) arranged when seen in a plan view, so acute angle portions are formed in 470 locations, as shown in fig. 16 and fig. 17. It should be noted that in fig. 16 and fig. 17, the "acute angle portions" are represented by white circles in the same way as in fig. 14 and fig. 15.

In addition to this, in the touch panel 1 according to the first mode of embodiment, the spaces SP may be formed between the dummy wires and the main electrode wires, between the dummy wires and the auxiliary electrode wires, and at the positions of intersection of two dummy wires (see fig. 5 to fig. 7). Accordingly, the touch panel 1 according to the first mode of embodiment makes it possible to reduce the number of acute angle portions formed to 204 (not depicted). Furthermore, as shown in fig. 17, in the touch panel 1 in which the first conductor wires 14 and the second conductor wires 24 are irregularly arranged when seen in a plan view, the positions at which the acute angle portions are formed are irregularly arranged so it is possible to prevent a regular arrangement of thick intersections. It should be noted that the abovementioned first mode of embodiment is an example of the present invention which does not limit the present invention, and various modifications are feasible according to the design, etc. provided that any such modifications are within the scope of the technical concept of the present invention.

### Advantages of the first mode of embodiment

The touch panel 1 according to the first mode of embodiment makes it possible to demonstrate the following advantages.
(1) The plurality of parallelogram patterns RP comprising the four wires 4a-4d surrounding one opening 2 are formed by the plurality of conductor wires (plurality of first conductor wires 14, plurality of second conductor wires 24). In addition to this, the touch panel 1 comprises the first conduction layer 10 including the plurality of conductor wires (first conductor wires 14) arranged without intersections, and the second conduction layer 20 laminated on the first conduction layer 10 and including the plurality of conductor wires (second conductor wires 24) arranged without intersections. When seen in a plan view in a state in which the first conduction layer 10 is laminated on the second conduction layer 20, the first conductor wires 14 and the second conductor wires 24 are arranged intersecting in such a way that the plurality of parallelogram patterns RP are formed. It is therefore possible to suppress an increase in the width of the conductor wires by ensuring that the plurality of conductor wires do not intersect in the first conduction layer 10 and the second conduction layer 20, respectively.

As a result, it is possible to suppress a deterioration in visibility in the touch panel 1 in which the plurality of parallelogram patterns RP are formed by the plurality of conductor wires. In addition, the parallelogram patterns RP are formed, so it is possible to increase the degree of design freedom in comparison with a touch panel formed by a square (grid) pattern and a touch panel formed by a diamond-shaped pattern.

Furthermore, the first conductor wires 14 and the second conductor wires 24 are irregularly arranged when seen in a plan view. As a result, it is possible to reduce the portions where thick portions EF are produced and to suppress a deterioration in visibility in comparison with a case in which the first conductor wires 14 and the second conductor wires 24 are set in such a way that a regular mesh is formed when seen in a plan view. In addition to this, the parallelogram pattern RP has a broader margin in relation to moiré compared with a diamond-shaped pattern, so it is possible to improve visibility in comparison with a touch panel formed by a diamond-shaped pattern.

In order to demonstrate the abovementioned advantages, the process by which the touch panel 1 according to the first mode of embodiment was invented will be described below. Before arriving at the present invention, the inventors of the present invention developed a pattern using diamond shapes, constituting a pattern having a broad margin in relation to moiré, and succeeded in making this compatible with a high-resolution liquid crystal, which could not be achieved with a pattern employing a grid.

This is because liquid crystal pixels have become finer and resolution has become far higher in recent years in order to improve liquid crystal image quality and exhibit clearer moving images, so when the shape of a mesh formed by fine metal wires is a grid, it is extremely difficult to find locations where moiré is not produced. However, ultra-high-resolution liquid crystals emerged with which it was difficult to achieve compatibility, even using a diamond-shaped pattern having a broader margin in relation to moiré than a grid. A mesh-shaped pattern was therefore needed in order to solve this problem.

In order to solve the problem, the inventors of the present invention devised a mesh shape in the form of parallelograms. This is because a parallelogram pattern has different angles and thereby further increases the degree of freedom by also adding elements with a different pitch to a diamond-shaped pattern which has a greater degree of freedom than a grid pattern. There may then be locations where moiré is not produced in a parallelogram pattern in proportion to the improved degree of freedom, in contrast to a situation where moiré is produced in a diamond-shaped pattern.

However, acute angles are present in a parallelogram pattern in the same way as in a diamond-shaped pattern, so thick intersections are present in a regular manner in a conventional simple mesh pattern, and visibility deteriorates. According to the present invention, a parallelogram pattern was therefore used as the shape of the mesh in order to widen the margin in relation to moiré, and the problem was solved by devising a pattern able to suppress a deterioration in visibility caused by thick intersections.
(2) The acute angles formed by the parallelogram pattern RP are set within a range of between 10 ° and 89 °, and the obtuse angles formed by the parallelogram patterns RP are set within a range of between 90 ° and 170 °. As a result, the shape of the pattern RP makes it possible to suppress a state which is the same as a state of thickening of the width of the conductor wires, and therefore it is possible to suppress a deterioration in visibility in the touch panel 1.
(3) The touch panel comprises a plurality of detection regions corresponding to a plurality of coordinates, and the plurality of detection regions are each formed in such a way as to repeat the same pattern within a preset range. As a result, the touch panel 1 has an external appearance in which the same pattern is repeated, so it is possible to provide the touch panel 1 with a uniform external appearance.
(4) The conductor wires in the first conduction layer 10 are arranged in parallel and the conductor wires in the second conduction layer 20 are arranged in parallel. As a result, the touch panel 1 has an external appearance in which parallel wires are uniformly arranged, so it is possible to provide the touch panel 1 with a uniform external appearance.
   In addition to this, the conductor wires in the first conduction layer 10 and the conductor wires in the second conduction layer 20 are arranged in an evenly-proportioned manner, so it is possible to improve the visibility of the touch panel 1.
(5) The parallelogram patterns RP are arranged along the first direction D1 which is a direction inclined with respect to the direction in which a plurality of pixels are arranged, and the second direction D2 intersecting the first direction D1. In addition to this, the conductor wires extending along the second direction D2 are joined to at least one of the conductor wires extending along the first direction D1. As a result, the touch panel 1 has an external appearance in which the parallelogram patterns RP are arranged along the first direction D1 and the second direction D2, so it is possible to provide the touch panel 1 with a uniform external appearance.
(6) The conductor wires in the first conduction layer 10 and the conductor wires in the second conduction layer 20 are arranged irregularly when seen in a plan view. It is therefore possible to reduce the acute angle portions formed by the first conductor wires 14 and the acute angle portions formed by the second conductor wires 24 in comparison with a case in which the first conductor wires 14 and the second conductor wires 24 are set in such a way that a regular mesh is formed when seen in a plan view. As a result, it is possible to reduce portions where thick portions EF are produced and it is possible to suppress a deterioration in visibility in comparison with a case in which the first conductor wires 14 and the second conductor wires 24 are set in such a way that a regular mesh is formed when seen in a plan view.
(7) The ratio of at least one set of electrode wires out of the main electrode wires and the auxiliary electrode wires, and the dummy wires, at an intersection between said at least one set of electrode wires and the dummy wires, expressed as said at least one set of electrode wires:said dummy wires, is any one out of 3:1, 2:2, 1:3 and 0:4. By virtue of the fact that intersections are not formed by at least one set of electrode wires out of the main electrode wires and the auxiliary electrode wires, it is therefore possible to suppress an increase in the number of locations where the widths of the conductor wires increase in the first conduction layer 10 and the second conduction layer 20, and also at the joining point where two conductor wires are joined. As a result, it is possible to suppress an increase in the width of the conductor wires in the first conduction layer 10 and the second conduction layer 20, respectively, and it is possible to suppress a deterioration in visibility in the touch panel 1.
(8) The dummy wires do not intersect at an acute angle when seen in a plan view. As a result, the thick portions EF are not formed by the dummy wires so it is possible to suppress a deterioration in visibility of the touch panel 1.
(9) A linear portion of the first main electrode wires 14M and a linear portion of the second main electrode wires 24M intersect when seen in a plan view. As a result, it is possible to increase the electrostatic capacity between the first conduction layer 10 and the second conduction layer 20, and it is possible to improve the detection accuracy for detecting the contact position of a conductor such as a fingertip on the operating surface of the touch panel 1.
(10) A linear portion of the first auxiliary electrode wires 14S and a linear portion of the second auxiliary electrode wires 24S intersect when seen in a plan view. As a result, it is possible to increase the electrostatic capacity between the first conduction layer 10 and the second conduction layer 20, and it is possible to improve the detection accuracy for detecting the contact position of a conductor such as a fingertip on the operating surface of the touch panel 1.
(11) The conductor wires include the plurality of main electrode wires (first main electrode wires 14M, second main electrode wires 24M) connected to the electrode, and the plurality of auxiliary electrode wires (first auxiliary electrode wires 14S, second auxiliary electrode wires 24S) connected to the electrode. In addition to this, the plurality of main electrode wires form a plurality of main electrode wire groups (first main electrode wire group 18, second main electrode wire group 28) constituting a pattern which is continuous in a preset direction when seen in a plan view. The plurality of main electrode wire groups are then joined only by the auxiliary electrode wires. As a result, it is possible to form a pattern in which the main electrode wire groups and auxiliary electrode wires do not intersect in the first conduction layer 10 and the second conduction layer 20, respectively.
(12) One end of the auxiliary electrode wires (first auxiliary electrode wires 14S, second auxiliary electrode wires 24S) is joined between the ends of the linear portions of the main electrode wires (first main electrode wires 14M, second main electrode wires 24M) in the first conduction layer 10 and the second conduction layer 20. The main electrode wires and the auxiliary electrode wires can therefore be joined in a "T" shape in the first conduction layer 10 and the second conduction layer 20, respectively, and it is possible to suppress the formation of thick portions EF at the joining portions between the main electrode wires and the auxiliary electrode wires.
   As a result, it is possible to prevent a reduction in the aperture ratio (transmission ratio) of the opening 2, when seen in a plan view, and it is also possible to suppress a deterioration in visibility. As a result, it is possible to improve the display quality in a display device comprising the touch panel 1.
(13) The lengths of the linear portions ST (STa, STb) of the conductor wires are set at between one and six times the pitch WP which is the length of one wire from among the four wires surrounding one opening 2.
   By setting the lengths of the linear portions ST at no greater than six times the pitch WP, it is possible to suppress a situation in which the linear portions ST are more readily visible than other portions of the conductor wires. As a result, it is possible to suppress a deterioration in visibility in the touch panel 1 in which the plurality of parallelogram patterns RP are formed by the plurality of conductor wires.
(14) The lengths of the linear portions ST (STa, STb) of the conductor wires are set at between one and four times the pitch WP. By setting the lengths of the linear portions ST at no greater than four times the pitch WP, it is possible to suppress a situation in which the linear portions ST are more readily visible than other portions of the conductor wires, and this is achieved to a greater extent than when the lengths of the linear portions ST are greater than four times the pitch WP. As a result, it is possible to suppress a deterioration in visibility in the touch panel 1 in which the plurality of parallelogram patterns RP are formed by the plurality of conductor wires.
(15) The plurality of parallelogram patterns RP are arranged along the first direction D1 which is a direction inclined with respect to an arrangement direction in which are arranged a plurality of pixels of a display device on which the touch panel 1 is laminated, and the second direction D2 intersecting the first direction D1. It is therefore possible to reduce interference (moiré) attributable to the relationship with periodicity, which occurs between the plurality of pixels of the display device and the mesh pattern formed by the arrangement of the plurality of parallelogram patterns RP. As a result, it is possible to suppress a deterioration in visibility in the touch panel 1.
(16) The spaces SP are formed between the dummy wires and the main electrode wires. As a result, it is possible to reduce the length of the dummy wires which are electrically insulated, so it is possible to reduce parasitic capacity (stray capacity) in the touch panel 1, and it is possible to suppress a reduction in detection sensitivity for detecting a change in electrostatic capacity.
(17) The spaces SP are formed between the dummy wires and the auxiliary electrode wires. As a result, it is possible to reduce the length of the dummy wires which are electrically insulated, so it is possible to reduce parasitic capacity in the touch panel 1, and it is possible to suppress a reduction in detection sensitivity for detecting a change in electrostatic capacity.
(18) The spaces SP are formed at the position where two dummy wires intersect. As a result, it is possible to reduce the length of the dummy wires, so it is possible to reduce parasitic capacity in the touch panel 1, and it is possible to suppress a reduction in detection sensitivity for detecting a change in electrostatic capacity. Furthermore, a display device according to the first mode of embodiment makes it possible to demonstrate the following advantage.
(19) The touch panel 1 is laminated thereon. As a result, it is possible to suppress a deterioration in visibility of the display device.

### Variant Examples

(1) The first mode of embodiment has a configuration in which the linear portions of the first main electrode wires 14M and the linear portions of the second main electrode wires 24M intersect when seen in a plan view, but this is not limiting. That is to say, it is equally possible to adopt a configuration in which the linear portions of the first main electrode wires 14M and the linear portions of the second main electrode wires 24M do not intersect. In this case, it is possible to adjust the electrostatic capacity by adjusting the positions at which the linear portions of the first main electrode wires 14M and the linear portions of the second main electrode wires 24M do not intersect. This makes it possible to improve the degree of design freedom of the touch panel 1.
(2) The first mode of embodiment has a configuration in which the linear portions of the first auxiliary electrode wires 14S and the linear portions of the second auxiliary electrode wires 24S intersect when seen in a plan view, but this is not limiting. That is to say, it is equally possible to adopt a configuration in which the linear portions of the first auxiliary electrode wires 14S and the linear portions of the second auxiliary electrode wires 24S do not intersect. In this case, it is possible to adjust the electrostatic capacity by adjusting the positions at which the linear portions of the first auxiliary electrode wires 14S and the linear portions of the second auxiliary electrode wires 24S do not intersect. This makes it possible to improve the degree of design freedom of the touch panel 1.
(3) According to the first mode of embodiment, the lengths of the linear portions of the first conductor wires 14 are set at between one and four times the pitch WP, but this is not limiting, and it is equally possible for the lengths of the linear portions of the first conductor wires 14 to be set at between one and 10 times the pitch WP. This also applies to the lengths of the linear portions of the second conductor wires 24. In this case, by setting the lengths of the linear portions ST at no greater than 10 times the pitch WP, it is possible to suppress a situation in which the linear portions ST are more readily visible than other portions of the conductor wires. As a result, it is possible to suppress a deterioration in visibility in the touch panel 1 in which the plurality of parallelogram patterns RP are formed by the plurality of conductor wires.
(4) The first mode of embodiment has a configuration in which the first conduction layer 10 forms the sensing layer of the touch panel 1 and the second conduction layer 20 forms the drive layer of the touch panel 1, but this is not limiting. That is to say, it is equally possible to adopt a configuration in which the first conduction layer 10 forms the drive layer of the touch panel 1 and the second conduction layer 20 forms the sensing layer of the touch panel 1. It should be noted that the conduction layer on the touched side which is arranged on the user side of the display device (mobile communication terminal) is generally referred to as the sensing layer, and the conduction layer on the side to which a drive voltage is applied is generally referred to as the drive layer.

Furthermore, it is possible to appropriately vary the design of the first conduction layer 10 and the second conduction layer 20 forming the sensing layer and the drive layer, in accordance with the size and shape of the screen of the display device.

For example, in a horizontally-long screen having an aspect ratio of 4:3 or 16:9, there may be times when the electrode wire directions are selected in such a way that the drive electrodes extend in the horizontal direction and the sensing electrodes extend in the vertical direction, and the number of electrode wires used corresponds to the rows and columns at that aspect ratio. Furthermore, there may also be times when the arrangement relationship of the viewer side/side opposite the viewer (display element side) is modified.

Furthermore, a touch-sensor film having a configuration in which the first conductor wires 14 and the second conductor wires 24 are formed on the front and rear surfaces of a common (single) insulating substrate, rather than the first conduction layer 10 and the second conduction layer 20 being separate elements, must handle functions commensurate with the design concept. This is due to the fact that the first conductor wires 14 and the second conductor wires 24 handle the functions of the sensing layer or the drive layer, as appropriate.

Moreover, a film sensor comprising a non-ITO metal wire conduction layer is generally of the GF2 (cover glass and one double-sided wiring film) type, in addition to the GFF type (cover glass and two single-sided wiring films) shown in fig. 3. A film sensor of the GF2 type has one electrode film, so it is possible to contribute to thinning of the touch panel. Furthermore, in a film sensor of the GF2 type, the pattern of the X electrodes and Y electrodes formed on the front and rear surfaces of the film substrate may be accurately aligned on the front and rear surfaces of the film substrate, so it is possible to effectively suppress moiré caused by pattern offset.
(5) In the first mode of embodiment, the widths of the first conductor wires are set in a range of between 2 µm and 7 µm, but this is not limiting, and it is equally possible for the widths of the first conductor wires 14 to be set in a range of between 1 µm and 10 µm. The same also applies to the widths of the second conductor wires 24.

### Exemplary Embodiments

Touch panels according to Exemplary Embodiment 1 and Exemplary Embodiment 2 and touch panels according to Comparative Example 1 to Comparative Example 4 will be described by means of the following exemplary embodiments, with reference to the first mode of embodiment.

### Exemplary Embodiment 1

A touch panel according to Exemplary Embodiment 1 is a touch panel in which a plurality of parallelogram patterns are formed by a plurality of conductor wires. Furthermore, the touch panel according to Exemplary Embodiment 1 has a node pitch of 4.2 mm × 4.2 mm.

### Exemplary Embodiment 2

A touch panel according to Exemplary Embodiment 2 is a touch panel in which a plurality of parallelogram patterns are formed by a plurality of conductor wires. Furthermore, the touch panel according to Exemplary Embodiment 2 has a node pitch of 5.0 mm × 5.0 mm.

### Comparative Example 1

A touch panel according to Comparative Example 1 is a touch panel in which a plurality of grid (square) patterns are formed by a plurality of conductor wires. Furthermore, the touch panel according to Comparative Example 1 has the same node pitch as the touch panel according to Exemplary Embodiment 1.

### Comparative Example 2

A touch panel according to Comparative Example 2 is a touch panel in which a plurality of diamond-shaped patterns are formed by a plurality of conductor wires. Furthermore, the touch panel according to Comparative Example 2 has the same node pitch as the touch panel according to Exemplary Embodiment 1.

### Comparative Example 3

A touch panel according to Comparative Example 3 is a touch panel in which a plurality of grid (square) patterns are formed by a plurality of conductor wires. Furthermore, the touch panel according to Comparative Example 3 has the same node pitch as the touch panel according to Exemplary Embodiment 2.

### Comparative Example 4

A touch panel according to Comparative Example 4 is a touch panel in which a plurality of diamond-shaped patterns are formed by a plurality of conductor wires. Furthermore, the touch panel according to Comparative Example 4 has the same node pitch as the touch panel according to Exemplary Embodiment 2.

### Comparison of degree of design freedom

The number of parameters that can be designed (number of designable parameters) was compared for the touch panels according to Exemplary Embodiment 1 and Exemplary Embodiment 2, and the touch panels according to Comparative Example 1 to Comparative Example 4. The comparison results are shown in table 1.

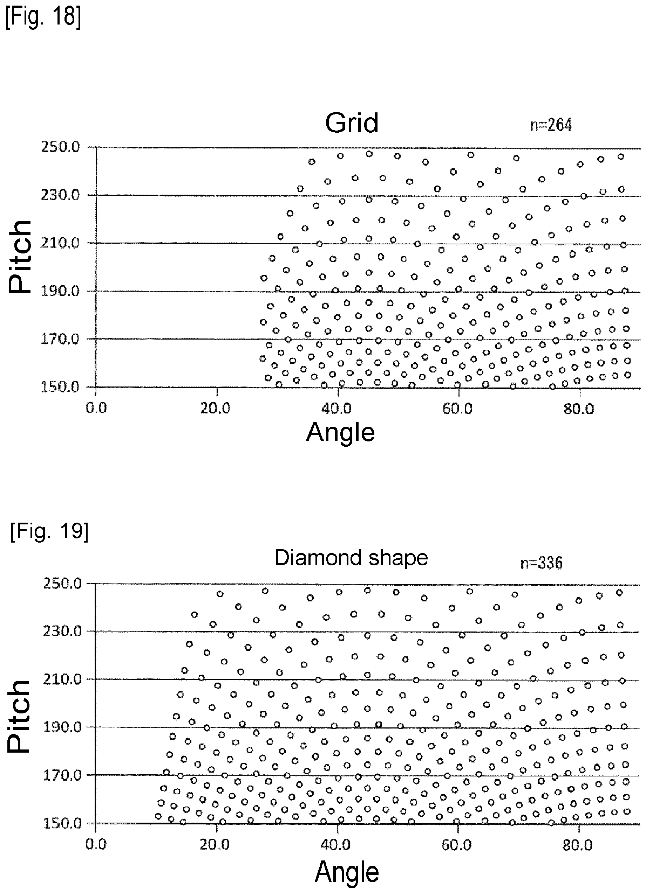

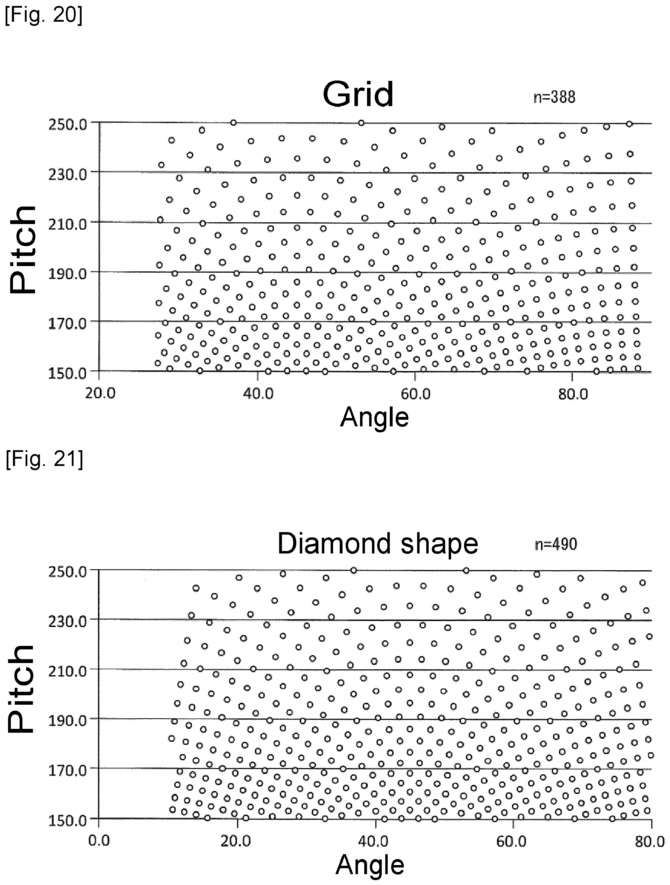

It should be noted that the number of designable parameters is the total number of a combination of adjacent angles (the abovementioned θ1 and θ2) and adjacent pitches (the abovementioned P1 and P2) that can be designed under a condition in which the node pitch is a preset value. Furthermore, the number of designable parameters in relation to the touch panel according to Comparative Example 1 is shown by the graph in fig. 18, and the number of designable parameters in relation to the touch panel according to Comparative Example 2 is shown by the graph in fig. 19. In the same way, the number of designable parameters in relation to the touch panel according to Comparative Example 3 is shown by the graph in fig. 20, and the number of designable parameters in relation to the touch panel according to Comparative Example 4 is shown by the graph in fig. 21.

It should be noted that in the graphs shown in fig. 18 to fig. 21, "Pitch" is depicted on the vertical axis and "Angle" is depicted on the horizontal axis. Furthermore, the number of designable parameters is represented by "n" in the graphs shown in fig. 18 to fig. 21.

**Table 1**

| | Exemplary Embodiment 1 | Exemplary Embodiment 2 | Comparative Example 1 | Comparative Example 2 | Comparative Example 3 | Comparative Example 4 |
|---|---|---|---|---|---|---|
| Designable parameters | 112 896 | 240 100 | 264 | 336 | 388 | 490 |

### Result of comparison

As shown in table 1, the touch panels according to Comparative Example 1 to Comparative Example 4 have fewer designable parameters than the touch panels according to Exemplary Embodiment 1 and Exemplary Embodiment 2. Specifically, the difference between the number of designable parameters in Comparative Example 1 and Comparative Example 3 having a grid pattern, and Comparative Example 2 and Comparative Example 4 having a diamond-shaped pattern is around 1.3 times. In contrast to this, the difference between the number of designable parameters in Comparative Example 1 and Comparative Example 3 and Exemplary Embodiment 1 and Exemplary Embodiment 2 having a parallelogram pattern is 300 times or greater.

It should be noted that the number of designable parameters in relation to the touch panels of the exemplary embodiments are not represented in graphs, unlike those of the comparative examples, because this would be too difficult to depict in graphic form. As a result, it was confirmed that the touch panels according to Exemplary Embodiment 1 and Exemplary Embodiment 2 have a far greater number of designable parameters and make it possible to significantly improve the degree of design freedom in comparison with the touch panels according to Comparative Example 1 to Comparative Example 4.

### Key to Symbols

- 1: Touch panel
- 2: Opening
- 4: Wires surrounding opening 2
- 10: First conduction layer
- 12: First substrate
- 14: First conductor wire
- 14M: First main electrode wire
- 14S: First auxiliary electrode wire
- 14D: First dummy wire
- 16a: First acute angle portion
- 16b: First obtuse angle portion
- 18: First main electrode wire group
- 20: Second conduction layer
- 22: Second substrate
- 24: Second conductor wire
- 24M: Second main electrode wire
- 24S: Second auxiliary electrode wire
- 24D: Second dummy wire
- 26a: Second acute angle portion
- 26b: Second obtuse angle portion
- 28: Second main electrode wire group
- RP: Pattern
- SP: Space
- CE: Processing region
- WP: Pitch
- STa: One linear portion from among the linear portions of the first conductor wire 14 where the length is set to three times the pitch WP
- STb: One linear portion from among the linear portions of the second conductor wire 24 where the length is set to three times the pitch WP
- EF: Thick portion

## Claims

1. Touch panel in which a plurality of parallelogram patterns comprising four wires surrounding one opening are formed by a plurality of conductor wires,
said touch panel comprising: a first conduction layer including a plurality of conductor wires arranged without intersections, and a second conduction layer laminated on the first conduction layer and including a plurality of conductor wires arranged without intersections, **characterized in that,** when seen in a plan view in a state in which the first conduction layer is laminated on the second conduction layer, the conductor wires in the first conduction layer and the conductor wires in the second conduction layer are arranged intersecting in such a way that the plurality of parallelogram patterns are formed.

2. Touch panel according to claim 1, **characterized in that** an acute angle formed by the parallelogram patterns is set within a range of between 10° and 89°, and
an obtuse angle formed by the parallelogram patterns is set within a range of between 90° and 170°.

3. Touch panel according to claim 1 or 2, **characterized in that** it comprises a plurality of detection regions corresponding to a plurality of coordinates, and
the detection regions are formed in such a way as to repeat the same pattern within a preset range.

4. Touch panel according to any one of claims 1 to 3, **characterized in that** the conductor wires in the first conduction layer are arranged in parallel, and
the conductor wires in the second conduction layer are arranged in parallel.

5. Touch panel according to any one of claims 1 to 4, **characterized in that** the parallelogram patterns are arranged along a first direction which is a direction inclined with respect to a direction in which a plurality of pixels are arranged, and a second direction intersecting the first direction, and
the conductor wires extending along the second direction are joined to at least one of the conductor wires extending along the first direction.

6. Touch panel according to any one of claims 1 to 5, **characterized in that** the conductor wires in the first conduction layer and the conductor wires in the second conduction layer are arranged irregularly when seen in the abovementioned plan view.

7. Touch panel according to any one of claims 1 to 6, **characterized in that** the conductor wires comprise: a plurality of main electrode wires connected to an electrode, a plurality of auxiliary electrode wires connected to an electrode, and a plurality of dummy wires which are not connected to the main electrode wires or the auxiliary electrode wires and are electrically insulated from an electrode; and
the ratio of at least one set of electrode wires out of the main electrode wires and the auxiliary electrode wires, and the dummy wires, at an intersection between said at least one set of electrode wires and the dummy wires, expressed as said at least one set of electrode wires: said dummy wires, is at least one out of 3:1, 2:2, 1:3 and 0:4.

8. Touch panel according to any one of claims 1 to 7, **characterized in that** the conductor wires comprise: a plurality of main electrode wires connected to an electrode, a plurality of auxiliary electrode wires connected to an electrode, and a plurality of dummy wires which are not connected to the main electrode wires or the auxiliary electrode wires and are electrically insulated from an electrode; and
the dummy wires do not intersect at an acute angle when seen in the abovementioned plan view.

9. Touch panel according to any one of claims 1 to 8, **characterized in that** the conductor wires comprise a plurality of main electrode wires connected to an electrode and a plurality of auxiliary electrode wires connected to an electrode; and
a linear portion of the main electrode wires in the first conduction layer and a linear portion of the main electrode wires in the second conduction layer intersect when seen in the abovementioned plan view.

10. Touch panel according to any one of claims 1 to 8, **characterized in that** the conductor wires comprise a plurality of main electrode wires connected to an electrode and a plurality of auxiliary electrode wires connected to an electrode; and
a linear portion of the main electrode wires in the first conduction layer and a linear portion of the main electrode wires in the second conduction layer do not intersect when seen in the abovementioned plan view.

11. Touch panel according to claim 9 or 10, **characterized in that** a linear portion of the auxiliary electrode wires in the first conduction layer and a linear portion of the auxiliary electrode wires in the second conduction layer intersect when seen in the abovementioned plan view.

12. Touch panel according to claim 9 or 10, **characterized in that** a linear portion of the auxiliary electrode wires in the first conduction layer and a linear portion of the auxiliary electrode wires in the second conduction layer do not intersect when seen in the abovementioned plan view.

13. Touch panel according to any one of claims 9 to 12, **characterized in that** the plurality of main electrode wires form a plurality of main electrode wire groups constituting a pattern which is continuous in a preset direction when seen in the abovementioned plan view, and the plurality of main electrode wire groups are joined only by the auxiliary electrode wires.

14. Touch panel according to any one of claims 9 to 13, **characterized in that,** in at least one out of the first conduction layer and the second conduction layer, one end of the auxiliary electrode wires is joined between ends of the linear portion of the main electrode wires.

15. Touch panel according to any one of claims 1 to 14, **characterized in that** the length of the linear portion of the conductor wires is set at between one and 10 times a pitch constituting the length of one wire from among the four wires surrounding the abovementioned one opening.

16. Touch panel according to claim 15, **characterized in that** the length of the linear portion of the conductor wires is set at between one and six times said pitch.

17. Touch panel according to claim 16, **characterized in that** the length of the linear portion of the conductor wires is set at between one and four times said pitch.

18. Touch panel according to any one of claims 1 to 17, **characterized in that** the plurality of parallelogram patterns are arranged along a first direction which is a direction inclined with respect to an arrangement direction in which pixels are arranged, and a second direction intersecting the first direction.

19. Display device **characterized in that** the touch panel according to any one of claims 1 to 18 is laminated thereon.
